Europäisches Patentamt

European Patent Office

Office européen des brevets

(11) Veröffentlichungsnummer : **0 077 975**
**B1**

(12) ## EUROPÄISCHE PATENTSCHRIFT

(45) Veröffentlichungstag der Patentschrift :
05.06.85

(51) Int. Cl.⁴ : **C 09 K 11/01**

(21) Anmeldenummer : 82109434.9

(22) Anmeldetag : 12.10.82

(54) **Verfahren zum Rückgewinnen von Selten Erdoxid- oder -Oxisulfid-Leuchtstoffen.**

(30) Priorität : 17.10.81 DE 3141258

(43) Veröffentlichungstag der Anmeldung :
04.05.83 Patentblatt 83/18

(45) Bekanntmachung des Hinweises auf die Patenterteilung : 05.06.85 Patentblatt 85/23

(84) Benannte Vertragsstaaten :
DE FR GB IT NL

(56) Entgegenhaltungen :
DE-B- 2 126 893
DE-B- 2 442 190

(73) Patentinhaber : International Standard Electric Corporation
320 Park Avenue
New York New York 10022 (US)
FR GB IT NL
Standard Elektrik Lorenz Aktiengesellschaft
Hellmuth-Hirth-Strasse 42
D-7000 Stuttgart 40 (DE)
DE

(72) Erfinder : Beckerle, Heinz
Albstrasse 5
D-7307 Aichwald 1 (DE)
Erfinder : Gerstle, Volker
Bodelshofer Strasse 40
D-7317 Wendlingen (DE)
Erfinder : Mauz, Gerhard
Unterdorfstrasse 69
D-7316 Köngen (DE)

(74) Vertreter : Pohl, Heribert, Dipl.-Ing et al
Standard Elektrik Lorenz AG Patent- und Lizenzwesen Kurze Strasse 8 Postfach 300 929
D-7000 Stuttgart 30 (DE)

## Beschreibung

Die Erfindung betrifft ein Verfahren zum Rückgewinnen von Seltenerdmetalloxid- und/oder Seltenerdmetalloxisulfid-Leuchtstoffen aus einem Leuchtstoffgemisch, welches außer diesen noch wenigstens einen Chalkogenid-Leuchtstoff, und zwar ein Sulfid- und/oder Selenid von Zink und/oder Kadmium, enthält, durch Suspendieren in Wasser, Versetzen mit einem Hypohalogenit und Ansäuern.

Ein solches Verfahren ist bekannt (DE-AS 24 42 190). Derartige Leuchtstoffgemische fallen insbesondere bei der Herstellung von Farbbildröhren an. Als Seltenerdmetalloxid-Leuchtstoff wird vorwiegend mit Europium aktiviertes Yttriumoxid, als Seltenerdmetalloxisulfid-Leuchtstoff mit Europium aktiviertes Yttriumoxisulfid verwendet. Derartige rot-emittierende Leuchtstoffe werden als Seltenerd-Leuchtstoffe bezeichnet. Als grün- oder blau-emittierende Leuchtstoffe werden z. B. Zinksulfid, Zinkkadmiumsulfid, Zinksulfid-Zinkselenid ($ZnS$, $Zn_{1-x}Cd_xS$, $ZnS_{1-y}ZnSe_y$), jeweils mit besonderen Metallen dotiert, verwendet. Derartige Leuchtstoffe werden als Chalkogenid-Leuchtstoffe bezeichnet.

Es ist bekannt, daß Sulfide oder Selenide durch Behandeln mit Hypohalogeniten in Sulfate oder Selenate überführt werden können. Beim Rückgewinnen von Seltenerd-Leuchtstoffen wird diese Eigenschaft dazu ausgenutzt, die Chalkogenid-Leuchtstoffe in lösliche Sulfate und/oder Selenate überzuführen und somit die Seltenerd-Leuchtstoffe abzutrennen. Bei den bekannten Verfahren werden die Sulfide oder Selenide quantitativ in Sulfate bzw. Selenate umgewandelt. Wegen der erforderlichen quantitativen Umwandlung weist das bekannte Verfahren im Hinblick auf die Menge der einzusetzenden Chemikalien Nachteile auf, wenn der Anteil von Seltenerd-Leuchtstoffen im Vergleich zur Menge der Chalkogenid-Leuchtstoffe gering ist. Dann muß nämlich sehr viel Chalkogenid-Leuchtstoff gelöst werden, um die geringe Menge des Seltenerd-Leuchtstoffs abtrennen zu können.

Der Erfindung liegt die Aufgabe zugrunde, ein Verfahren zum Rückgewinnen von Seltenerd-Leuchtstoffen aus einem Gemisch derselben mit Chalkogenid-Leuchtstoffen anzugeben, das mit einer geringeren Menge an eingesetztem Hypohalogenit als beim bekannten Verfahren auskommt.

Diese Aufgabe wird erfindungsgemäß dadurch gelöst,

— daß zunächst der Leuchtstoff-Suspension etwa 1 bis 2 % der Hypohalogenitmenge zugesetzt wird, die erforderlich wäre, den gesamten vorhandenen Chalkogenid-Leuchtstoff in ein Sulfat und/oder Selenat umzusetzen,

— daß danach die Suspension derart auf einen pH-Wert von 1 bis 6,5 angesäuert wird, daß elementarer Schwefel und/oder Selen entsteht, das sich an den Körnern des Chalkogenid-Leuchtstoffs anlagert und diese Leuchtstoffkörner sedimentieren,

— daß nach dem Sedimentieren die überstehende wäßrige Seltenerd-Leuchtstoff-Suspension dekantiert wird und aus dieser der Seltenerd-Leuchtstoff zentrifugiert, gewaschen und anschließend getrocknet wird.

Beim erfindungsgemäßen Verfahren werden also nur noch ein bis zwei Prozent der Hypohalogenitmenge zugesetzt, die bei Anwendung des bekannten Verfahrens zugesetzt werden müßte. Der Vorteil der Erfindung besteht jedoch nicht nur in dieser Einsparung von Chemikalien. Besonders hervorzuheben ist, daß beim erfindungsgemäßen Verfahren die Schwermetalle des Chalkogenid-Leuchtstoffs überwiegend in unlöslicher Form erhalten bleiben und damit leicht entfernt und sicher gelagert werden können. Dies führt zu einer geringeren Umweltbelastung als beim bekannten Verfahren, wo die Chalkogenid-Leuchtstoffe in wasserlösliche Verbindungen überführt werden.

Die Oxidation der Chalkogenid-Ionen zu Schwefel und/oder Selen findet in einem pH-Bereich von 1 bis 6,5 statt, und zwar umso schneller, je niedriger der pH-Wert liegt. Unterhalb von pH-2 setzt allerdings auch eine unerwünschte allmähliche Oxidation zum Sulfat und/oder Selenat ein, die mit fallendem pH-Wert immer größeren Anteil gewinnt. Ein Optimum zwischen Geschwindigkeit und erwünschter Wirkung der Reaktion liegt bei einem pH-Wert von etwa 1,5 bis 2. Das Ansäuern erfolgt vorzugsweise mit einer Mineralsäure, wie zum Beispiel Salpetersäure.

Die Erfindung ist nachstehend anhand eines Ausführungsbeispiels näher erläutert. Dabei ist unterstellt, daß das Leuchtstoffgemisch weitere Verunreinigungen enthält, wie es in aller Regel bei Leuchtstoffgemischen der Fall ist, die bei der Farbbildröhrenherstellung zum Beispiel als Sediment aus Schirmraumabflußkanäalen anfallen.

Eine Leuchtstoff-Suspension mit Verunreinigungen wird zunächst durch ein Sieb geleitet, dessen Löcher etwa 100 µm Durchmesser aufweisen, wodurch grobe Fremdkörner entfernt werden. Reste wasserlöslicher Substanzen, wie zum Beispiel Ammoniumdichromat oder Polyvinylalkohol werden herausgewaschen. Die noch vorhandenen festen Bestandteile werden dann auf etwa 450 °C erhitzt, wobei organische Bestandteile verbrennen oder sich verflüchtigen. Danach liegt im wesentlichen nur noch das von den Verunreinigungen befreite Leuchtstoffgemisch aus Seltenerd-Leuchtstoffen und Chalkogenid-Leuchtstoffen vor.

Zum Darstellen der quantitativen Verhältnisse sei im folgenden davon ausgegangen, daß als Chalkogenid-Leuchtstoff ein dotiertes Zinksulfid vorhanden ist und auf 100 g Zinksulfid 10 g Seltenerd-Leuchtstoff kommen.

In ein 1-Liter-fassendes Becherglas werden

110 g des ausgeheizten Leuchtstoffgemisches, das also 100 g Zinksulfid enthält, eingewogen und mit 0,75 Liter Wasser versetzt. Die durch Rühren erhaltene Suspension wird unter weiterem Umrühren mit 30 g einer wäßrigen Lösung mit 13 Gew.% Natriumhypochlorit versetzt. Insgesamt sind also auf 100 g Zinksulfid 3,9 g Natriumhypochlorit zugesetzt. Dies entspricht etwa 1,3 % der Menge, die zugesetzt werden müßte, um die gesamten 100 g Zinksulfid in wasserlösliches Zinksulfat überzuführen. Dazu sind nämlich auf 100 g Zinksulfid 304 g Natriumhypochlorit erforderlich.

Der Suspension wird eine solche Menge konzentrierter Salpetersäure zugesetzt, bis ein pH-Wert von 1,5 bis 2 erreicht ist.

Bei weiterem Umrühren wird nach kurzer Zeit elementarer Schwefel ausgeschieden, der sich an die Zinksulfid-Leuchtstoffkörner anlagert. Die über den elementaren Schwefel zusammenballenden Zinksulfid-Leuchtstoffkörner sedimentieren trotz des Rührens, während der Seltenerd-Leuchtstoff suspendiert bleibt. Mittels einer UV-Lampe wird der Sedimentationsprozeß überwacht und nach beendeter Sedimentation wird die überstehende Suspension, in der der Seltenerd-Leuchtstoff enthalten ist, abgegossen. Aus dieser Suspension wird der Seltenerd-Leuchtstoff durch Zentrifugieren abgetrennt. Dieser wird dann noch drei- bis viermal mit jeweils 1 Liter demineralisiertem Wasser gewaschen und anschließend bei 120 °C getrocknet.

Im Unterschied zu allen bekannten Rückgewinnungsverfahren für Seltenerd-Leuchtstoffe wird also beim angegebenen Verfahren der gleichzeitig vorhandene Chalkogenid-Leuchtstoff nicht in eine lösliche Form überführt, sondern der Verfahrensablauf wird so gestaltet, daß nur Schwefel entsteht, der, wie sich herausgestellt hat, als Flockungsmittel für die Chalkogenid-Leuchtstoffe dient.

Das Verfahren ist noch voll wirksam, wenn nur etwa 1 % der Menge an Hypochlorit zugesetzt wird, die erforderlich wäre, um der gesamten anwesenden Chalkogenid-Leuchtstoff in lösliches Sulfat oder Selenat zu überführen. Vorzugsweise wird eine Menge von etwa 1,5 bis 2 % der beim bekannten Verfahren benötigten Hypochlorit-Menge zugesetzt, da dann das vorgeschlagene Verfahren besonders sicher und schnell abläuft. Die zuzusetzende Menge an Hypochlorit ist nach oben hin nicht begrenzt jedoch gehen die Vorteile des angegebenen Verfahrens zunehmend verloren, je mehr Hypochlorit über die erforderliche Mindestmenge hinaus zugesetzt wird.

**Patentansprüche**

1. Verfahren zum Rückgewinnen von Seltenerdmetalloxid- und/oder Seltenerdmetalloxisulfid-Leuchtstoffen aus einem Leuchtstoffgemisch, welches außer diesen noch wenigstens einen Chalkogenid-Leuchtstoff, und zwar ein Sulfid- und/oder Selenid von Zink und/oder Kadmium, enthält, durch Suspendieren in Wasser, Versetzen mit einem Hypohalogenit und Ansäuern, dadurch gekennzeichnet,

— das zunächst der Leuchtstoff-Suspension etwa 1 bis 2 % der Hypohalogenitmenge zugesetzt wird, die erforderlich wäre, den gesamten vorhandenen Chalkogenid-Leuchtstoff in ein Sulfat und/oder Selenat umzusetzen,

— daß danach die Suspension derart auf einen pH-Wert von 1 bis 6,5 angesäuert wird, daß elementarer Schwefel und/oder Selen entsteht, das sich an den Körnern des Chalkogenid-Leuchtstoffs anlagert und diese Leuchtstoffkörner sedimentieren,

— daß nach dem Sedimentieren die überstehende wäßrige Seltenerd-Leuchtstoff-Suspension dekantiert wird und aus dieser der Seltenerd-Leuchtstoff zentrifugiert, gewaschen und anschließend getrocknet wird.

2. Verfahren nach Anspruch 1, dadurch gekennzeichnet, daß auf einen pH-Wert von 1,5 bis 2 angesäuert wird.

**Claims**

1. Process for reclaiming rare-earth metallic oxide and/or rare-earth metallic oxysulphide phosphors from a phosphor mixture which, apart from these, also contains at least one chalcogenide phosphor, namely a sulphide and/or selenide of zinc and/or cadmium, by suspending in water, mixing with a hypohalide and acidifying, characterized in that,

— first, there is added to the phosphor suspension approximately 1 to 2 % of the amount of hypohalide which would be necessary for converting the whole of the chalcogenide phosphor present into a sulphate and/or selenate,

— thereafter, the suspension is acidified up to a pH value ranging between 1 and 6.5 in such a way as to produce elementary sulphur and/or selenium which accumulates on the granules of the chalcogenide phosphor causing these phosphor granules to sediment,

— after the sedimentation, the excess aqueous rare-earth-phosphor suspension is decanted and the rare-earth phosphor is centrifuged from this, washed and then dried.

2. A process as claimed in Claim 1, characterized in that acidification is carried out to a pH value ranging between 1.5 and 2.

**Revendications**

1. Procédé de récupération d'oxydes et/ou d'oxysulfures de terres rares fluorescentes dans un mélange de substances fluorescentes contenant en dehors de ces derniers au moins un chalcogénure fluorescent, à savoir un sulfure et/ou un séléniure de zinc et/ou de cadmium, par mise en suspension dans l'eau, addition d'un hypohalogénure et acidification, caractérisé en ce que

— la suspension de substances fluorescentes est d'abord additionnée de 1 à 2 % de la quantité d'hypohalogénures qui serait nécessaire pour transformer en un sulfate et/ou un séléniate la quantité totale de chalcogénures fluorescents présents,

— en ce qu'ensuite la suspension est acidifiée et portée à un pH de 1 à 6,5, qu'il y a production de soufre et/ou de sélénium élémentaire qui se dépose sur les grains de chalcogénures fluorescents et provoque la sédimentation de ces grains et

— en ce que, après la sédimentation, la suspension aqueuse surnageante de terres rares fluorescentes est décantée pour ensuite en extraire les terres rares fluorescentes par centrifugation, lavage et séchage.

2. Procédé selon la revendication 1, caractérisé en ce que l'acidification amène le pH à une valeur de 1,5 à 2.